# EUROPÄISCHE PATENTSCHRIFT

(11) **EP 1 527 295 B1**
(45) Veröffentlichungstag und Bekanntmachung des Hinweises auf die Patenterteilung: **04.07.2007**
(21) Anmeldenummer: 03766122.0
(22) Anmeldetag: 04.07.2003
(51) Int. Cl.: F16K 11/087

(54) **DREI-WEGE-KUGELHAHN**
THREE-WAY BALL VALVE
ROBINET A BOISSEAU SPHERIQUE A TROIS VOIES

(30) Priorität: 27.07.2002 DE 20211356 U
(43) Veröffentlichungstag der Anmeldung: 04.05.2005
(73) Patentinhaber: Interforge Klee GmbH, 27356 Rotenburg/Wümme (DE)
(72) Erfinder: KLEE, Klaus, 27356 Rotenburg (DE)
(74) Vertreter: Eisenführ, Speiser & Partner
(86) Internationale Anmeldenummer: PCT/EP2003/007153
(87) Internationale Veröffentlichungsnummer: WO 2004/013522

(56) Entgegenhaltungen:
- AT-B- 404 172
- US-A- 3 115 896
- US-A- 4 019 536
- PATENT ABSTRACTS OF JAPAN vol. 006, no. 199 (M-162), 8. Oktober 1982 (1982-10-08) & JP 57 103977 A (YONEDA KOGYO KK), 28. Juni 1982 (1982-06-28)
- PATENT ABSTRACTS OF JAPAN vol. 017, no. 548 (M-1490), 4. Oktober 1993 (1993-10-04) & JP 05 149459 A (TAKAGI IND CO LTD), 15. Juni 1993 (1993-06-15)
- PATENT ABSTRACTS OF JAPAN vol. 1997, no. 01, 31. Januar 1997 (1997-01-31) & JP 08 233131 A (NICHIDEN KOGYO KK), 10. September 1996 (1996-09-10)
- PATENT ABSTRACTS OF JAPAN vol. 1997, no. 03, 31. März 1997 (1997-03-31) & JP 08 303619 A (FUJI KOKI SEISAKUSHO:KK), 22. November 1996 (1996-11-22)
- PATENT ABSTRACTS OF JAPAN vol. 1998, no. 11, 30. September 1998 (1998-09-30) & JP 10 169806 A (KOOA GAS KAGOSHIMA:KK), 26. Juni 1998 (1998-06-26)

## Beschreibung

Die Erfindung betrifft einen Drei-Wege-Kugelhahn mit einem Gehäuse, welches zwei auf einer gemeinsamen ersten Achse liegende und in entgegengesetzte Richtungen weisende Abgänge und einen senkrecht dazu angeordneten Eingang aufweist, in dessen Achse jenseits des Kreuzungspunkte mit der ersten Achse eine Spindel o. dgl. Antriebsorgan im Gehäuse gelagert ist, mit der ein im Gehäuse ebenfalls gelagertes, im Wesentlichen kugelförmiges und mit Bohrungen versehenes Schaltorgan um die zweite Achse verdrehbar ist.

Kugelhähne dieser Art sind seit langem bekannt und vielfach in Benutzung. Wenn man diese Kugelhähne umschalten will von ihrem einen Abgang zu dem anderen der beiden Abgänge, dann muss man die Antriebsspindel um 180° oder bei anderen Ausführungen um 90° aus ihren einen in ihre andere Stellung bewegen. Dieser Weg ist in manchen Anwendungsfällen unerwünscht lang. Darüber hinaus bedeutet der lange Weg auch vergleichsweise lange Umschaltzeiten zwischen den beiden Stellungen des Drei-Wege-Kugelventils. Neben den langen Schaltzeiten haben die bekannten Kugelhähne auch den Nachteil, dass die vielfach vorgesehenen elektrischen oder pneumatischen Antriebe aufwendiger sind als erwünscht, weil sie die langen Wege der Spindel erzeugen oder aber bei dem Schaltweg von 90° reversierbar sein müssen.

Dokument JP-A-408233131 offenbart einen Drei-Wege-Kugelhahn gemäß den Oberbegriff des Anspruchs 1.

Der Erfindung liegt vor diesem Hintergrund die Aufgabe zu Grunde einen Drei-Wege-Kugelhahn so auszubilden, dass er ohne Mehraufwand schneller umge-schaltet werden können.

Zur Lösung dieser Aufgabe wird bei einem Ventil der eingangs genannten Bauart erfindungsgemäß vorgeschlagen, dass das kugelförmige Schaltorgan mit mindestens zwei Sackbohrungen von etwa gleichem Durchmesser versehen ist, deren Achsen in einer gemeinsamen, den Kreuzungspunkt enthaltenden Ebene liegen und unter einem Winkel von 120° zueinander und senkrecht zur zweiten Achse verlaufen und dass das Schaltorgan einen Einlasskanal aufweist, der aus dem Bereich des Kreuzungspunktes entlang der zweiten Achse bis zum Eingang des Gehäuses führt.

Erreicht werden die schnelleren Schaltzeiten bei dieser Lösung damit, dass die Spindel, und mit der Spindel das kugelförmige Schaltorgan nur noch um 60° verdreht zu werden brauchen, um aus der einen Schaltstellung in die andere zu gelangen. Der bisher nötige Schaltwinkel von 90° bzw. 180° ist also um ein bzw. auf ein Drittel reduziert wodurch auch die Schaltzeiten um bzw. auf ein Drittel zurückgeführt werden.

In einer besonders bevorzugten Ausführungsform der Erfindung ist vorgesehen, dass das Schaltorgan in der gemeinsamen Ebene drei um jeweils 120° versetzte Sackbohrungen aufweist.

Diese Ausführungsform verbindet die erreichten kurzen Schaltzeiten mit dem weiteren großen Vorteil, dass die Spindel zum Umschalten zwischen den beiden Abgängen nicht mehr zunächst in der einen Drehrichtung und dann in der anderen entgegengesetzten Drehrichtung bewegt werden braucht. Vielmehr ist es nun möglich, die Spindeln nur noch in einer Richtung anzutreiben. Jede Drehung der Kugel um 60° weitere schaltet von dem einen auf den zweiten Abgang um. Diese Lösung ermöglicht die Verwendung von nicht reversierenden Stellmotoren bzw. Stellantrieben elektrischer oder pneumatischer Art.

Die Erfindung ist nachstehen an Hand eines Ausführungsbeispiels näher erläutert und in den Zeichnungen dargestellt. In diesen zeigen
- Fig. 1: eine Seitenansicht eines Drei-Wege-Ventils,
- Fig. 2: einen Längsschnitt durch das Ventil der Fig. 1, der den auf dem Zeichnungsblatt nach unten weisenden Eingang und die nach rechts und links davon weisenden beiden Abgänge zeigt,
- Fig. 3: einen Querschnitt durch das Ventil der Fig. 1 in Höhe der beiden Abgänge;
- Fig. 4: eine dreidimensionale Darstellung des kugelförmigen Schaltorgans;
- Fig. 5: eine Draufsicht auf das Schaltorgan;
- Fig. 6: einen Schnitt durch das Schaltorgan in der selben Schnittebene wie Fig. 3;
- und Fig. 7: einen Ventilschnitt durch das Schaltorgan in derselben Schnittebene wie Fig. 2.

Die nachstehend benutzten Begriffe, wie "oben, unten, rechts oder links" beziehen sich auf die Darstellungen des Ausführungsbeispiels in den Zeichnungen; es versteht sich, dass durch die Verwendung dieser Begriffe die Einbaulage des Ventils in keine Weise beschränkt werden soll. Das Ventil gemäß der Erfindung ist wie jedes andere Drei-Wege-Ventil in praktisch jeder beliebigen wohnräumlichen Stellung montierbar. Die Verwendung dieser Begriffe dient also allein einer Vereinfachung der Beschreibung und damit einer leichteren Verständlichkeit.

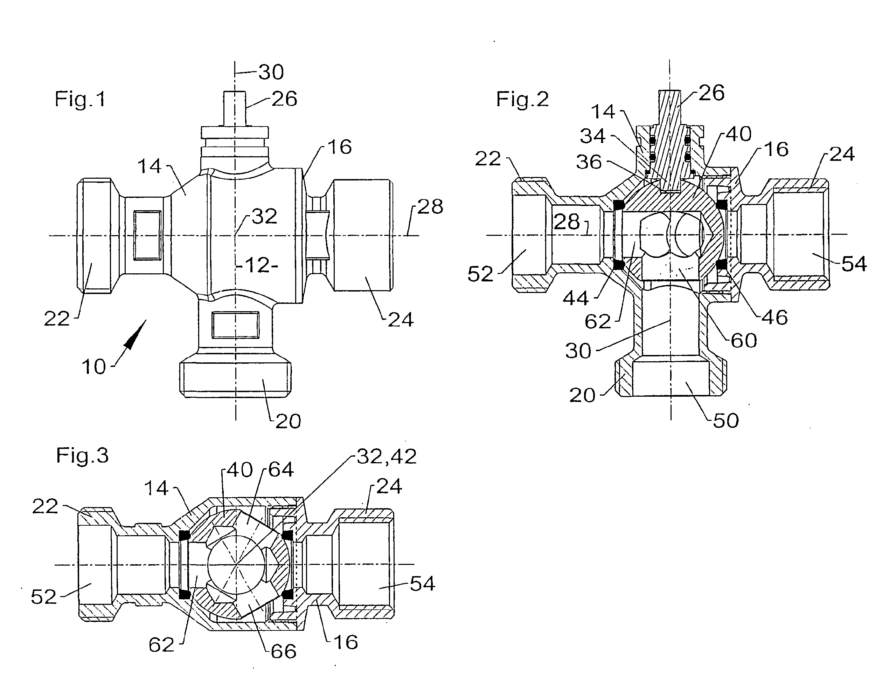

Das in den Figuren 1 - 3 gezeigte Ventil 10 weist ein Gehäuse 12 auf, das aus einem Grundkörper 14 und einem Verschlussteil 16 besteht, die fest miteinander verbunden sind.

Das Ventil 10 weist einen Eingang 20 mit einer in das Innere des Gehäuses führenden Stufenbohrung 50, einen linken Abgang 22 und einen rechten Abgang 24 sowie von den Abgängen in das Innere des Gehäuses 12 führenden Stufenbohrungen 52, 54 auf. Aus dem Grundkörper 14 des Gehäuses 12 ragt eine Spindel 26 heraus, die in nachstehend beschriebener und prinzipiell üblicher Weise zum Umschalten des Ventils benötigt wird.

Die beiden Abgänge 22, 24 mit ihren Stufenbohrungen 52,54 liegen in einer gemeinsamen ersten Achse 28. Der Eingang 20 mit seiner Stufenbohrung 50 und die Spindel 26 sind in einer gemeinsamen zweiten Achse 30 angeordnet. Die erste und zweite Achse schneiden sich in einem gemeinsamen Kreuzungspunkt 32 und verlaufen senkrecht zueinander.

Fig. 2 ist zu entnehmen, dass es sich bei dem Eingang 20 um einen Eingang mit aussengengewinde, bei dem linken Abgang 22 um einen Abgang mit Außengewinde und bei dem rechten Abgang 24 um solchen mit Innengewinde handelt; diese Ausgestaltung ist optional und ohne Bedeutung für die Erfindung; ebenso können Lötanschlüsse oder Pressanschlüsse vorgesehen sein.

Aus der Darstellung der Fig. 2 ist zu entnehmen, dass die Spindel 26 in einer Bohrung des Grundkörpers 14 des Ventils 10 abgedichtet ist eingesetzt und einen Flansch aufweist, der die Spindel an einem Herauswandern nach oben aus dem Gehäuse 12 hindert. Des Weiteren ist zu erkennen, dass die Spindel 26 an ihrem unteren freien Ende einen Mitnehmerkeil 34 aufweist, der in eine Keilnut 36 eines kugelförmigen Schaltorgans 40 eingreift, welches sich im Gehäuse 12 befindet.

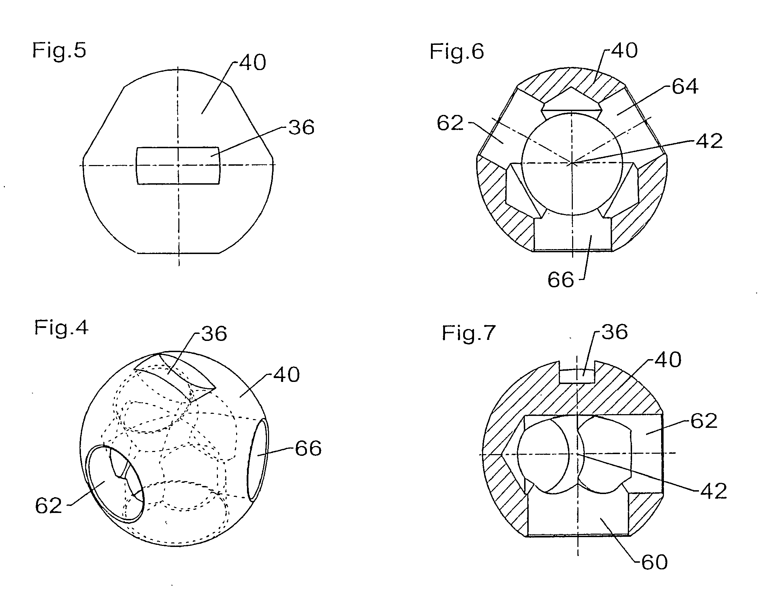

Das kugelförmige Schaltorgan 40, das nachstehend auch kurz mit dem Begriff "Kugel" bezeichnet wird, ist in den Figuren 4 - 7 in vergrößertem Maßstab dargestellt. Der aus den Figuren 5 -7 erkennbare Mittelpunkt 42 der Kugel ist ausweislich der Figuren 2 und 3 im Kreuzungspunkt 32 der ersten und zweiten Achsen 28, 30 angeordnet, wenn sie sich innerhalb des Gehäuses 12 des Ventils 10 in ihrer Betriebsstellung befindet.

In die Kugel 40 sind in dem bevorzugten Ausführungsbeispiel insgesamt vier Bohrungen eingearbeitet, deren Achsen sämtlich den Mittelpunkt 42 der Kugel durchsetzen. Es handelt sich zunächst um eine Eingangsbohrung 60, die in den Figuren 2 und 7 sichtbar ist und in der Zeichnungsdarstellung von unten in die Kugel hineinführt. Des Weiteren sind im bevorzugten Ausführungsbeispiel drei Sackbohrungen 62, 64, 66 vorgesehen, deren Achsen unter einem Winkel von 120° zueinander in einer gemeinsamen Ebene verlaufen, die in der Zeichnungsebene der Figuren 6 und 3 liegt; gleichzeitig schließt diese Ebene die erste Achse 28 ein, wenn sich die Kugel im Gehäuse 12 befindet.

Innerhalb des Ventils 10 wird die Kugel in ihrer Position einerseits durch den Mitnehmerkeil 34 und andererseits durch zwei Dichtungen 44, 46 gehalten.

Zum Montieren des Ventils wird bei getrennten Gehäuseteilen 14, 16 zunächst die Spindel von Innen in die für sie vorgesehene Bohrung des Gehäuseteils 14 eingeführt. Dann wird einerseits die Dichtung 44 in den Grundkörper 14 eingesetzt, der dort das innere Ende der Stufenbohrung 52 des linken Abgangs 22 umgibt. Anschließend wird die Kugel 40 in das Innere des Grundkörpers 14 eingeführt und von unten nach oben mit ihrer Keilnut 36 in Eingriff mit dem Mitnehmerkeil 34 der Spindel 26 gebracht. Schließlich wird die Dichtung 46 in das Verschlussteil 16 des Gehäuses 12 eingebracht, wo er das innere Ende der Stufenbohrung 54 des rechten Abgangs 24 umgibt. Nun wird das Verschlussteil 16 mit dem Grundkörper 14 des Gehäuses 12 verbunden, sei es durch Verschrauben oder abdichtend Verkleben, wodurch die Dichtung 46 im Kontakt mit der Kugel 40 kommt und diese gegen die gegenüberliegende Dichtung 44 drückt.

In dieser Stellung der Kugel 40 fluchtet ihre Eingangsbohrung 60 mit der Stufenbohrung 50 des Eingangs 20 des Ventils 10, so dass vom Eingang 20 her das an die Abgänge 22 oder 24 zu schaltende Fluid in das Innere der Kugel gelangen kann. In der Stellung der Kugel 40 gemäß den Figuren 2 und 3 gelangt das Fluid von dort zum linken Abgang 22, während das Kugelinnere gegenüber der Stufenbohrung 54 des rechten Abgangs 54 abgesperrt ist, wie die beiden Darstellungen der Figuren 2 und 3 zeigen.

Verdreht man die Kugel 40 aus der gezeichneten Stellung im Uhrzeigersinn durch entsprechendes Verdrehen der Spindel 26 um 60 ° um die zweite Achse 30, dann erkennt man aus Figur 3, dass sich die Sackbohrung 64 in Flucht mit der Stufenbohrung 54 des zweiten Abgangs 24 bewegt und die Kugeloberfläche zwischen den Sackbohrungen 62 und 66 sich abdichtend gegen die Dichtung 44 legt und dort absperrt, so dass das Fluid aus der Stufenbohrung 50 über die Eingangsbohrung 60 in den rechten Abgang 24 gelangt. Verdreht man die Kugel 40 weiter im Uhrzeigersinn um 60°, dann nimmt die Sackbohrung 64 nun die Position der in Figur 3 gezeichneten Sackbohrung 66 ein, während die Letztere in die Position der gezeichneten Sackbohrung 62 gelangt und den Weg für das Fluid von der Eingangsbohrung 60 in die Stufenbohrung 52 des linken Abgangs 22 freigibt.

Bei einer nicht dargestellten Ausführungsform weist die Kugel bei sonst unveränderter Konstruktion eine der beiden Sackbohrungen, beispielsweise also die Sackbohrung 66 nicht auf. Das hat zur Folge, dass beim Verdrehen der Spindel 26 im Uhrzeigersinn um 60° wiederum die Bohrung 62 außer Flucht mit der Stufenbohrung 52 und die Sackbohrung 64 in Flucht mit der Stufenbohrung 54 des rechten Abgangs 24, wie es zuvor beschrieben wurde. Um dieser Ausführungsform aber ebenfalls mit einem Verdrehwinkel der Spindel von nur 60° zwischen den Umschaltstellungen auszukommen, muss die Spindel nun zum Umschalten vom rechten Abgang 24 auf den linken Abgang 22 entgegen dem Uhrzeigesinn um 60 ° zurückgedreht werden. Das einfachere Verdrehen der Spindel in nur einer Drehrichtung, wie bei dem bevorzugten Ausführungsbeispiel geschildert, entfällt hier.

## Patentansprüche

1. Drei-Wege-Kugelhahn (10) mit einem Gehäuse (12), welches zwei auf einer gemeinsamen ersten Achse (28) liegende und in entgegengesetzte Richtungen weisende Abgänge (22, 24) und einen senkrecht dazu angeordneten Eingang (20) aufweist, in dessen Achse (zweite Achse 30) jenseits des Kreuzungspunktes (32) mit der ersten Achse eine Spindel o. dgl. Antriebsorgan (26) im Gehäuse gelagert ist, mit der ein im Gehäuse ebenfalls gelagertes, im Wesentlichen kugelförmiges und mit Bohrungen versehenes Schaltorgan (40) um die zweite Achse verdrehbar ist,
**dadurch gekennzeichnet, dass** das kugelförmige Schaltorgan (40) mit mindestens zwei Sackbohrungen (62 - 66) von etwa gleichem Durchmesser versehen ist, deren Achsen in einer gemeinsamen, den Kreuzungspunkt enthaltenden Ebene liegen und unter einem Winkel von 120° zueinander und senkrecht zur zweiten Achse verlaufen und dass das Schaltorgan einen Einlasskanal (60) aufweist, der aus dem Bereich des Kreuzungspunktes entlang der zweiten Achse bis zum Eingang des Gehäuses führt.

2. Drei-Wege-Kugelhahn nach Anspruch 1,
**dadurch gekennzeichnet, dass** das Schaltorgan (40) in der gemeinsamen Ebene drei um jeweils 120° versetzte Sackbohrungen aufweist.

## Claims

1. Three-way ball valve (10) having a housing (12), which has two outlets (22, 24) situated on a common first axis (28) and facing in opposite directions as well as one inlet (20) disposed at right angles thereto, on the axis (second axis 30) of which on the far side of the point of intersection (32) with the first axis a spindle or similar drive device (26) is mounted in the housing and is the means whereby a substantially spherical switching device (40) provided with bores and likewise mounted in the housing is rotatable about the second axis,
**characterized in that** the spherical switching
device (40) is provided with at least two blind bores (62 - 66) of approximately identical diameter, the axes of which lie in a common plane containing the point of intersection and extend at an angle of 120° to one another and at right angles to the second axis, and that the switching device has an inlet channel (60) that leads from the region of the point of intersection along the second axis up to the inlet of the housing.

2. Three-way ball valve according to claim 1,
**characterized in that** the switching device (40) has in the common plane three blind bores offset in each case by 120°.

## Revendications

1. Robinet (10) à boisseau sphérique à trois voies qui présente deux sorties (22, 24) se trouvant sur un premier axe commun (28 et orientées dans des directions opposées et une entrée (20) disposée perpendiculairement à celles-ci, dans l'axe de laquelle (deuxième axe 30) est montée dans le boîtier de l'autre côté du point de croisement avec le premier axe une broche ou un organe d'entraînement similaire (26) avec laquelle un organe de commutation (40) monté également dans le boîtier, essentiellement de forme sphérique et pourvu de trous peut être mis en rotation autour du deuxième axe, **caractérisé en ce que** l'organe de commutation (40) de forme sphérique est pourvu d'au moins deux trous borgnes (62 - 66) de diamètre approximativement égal, dont les axes se trouvent dans un plan commun contenant le point de croisement et s'étendent à un angle de 120° l'un par rapport à l'autre et perpendiculairement au deuxième axe et **en ce que** l'organe de commutation présente un canal d'entrée (60) qui conduit de la zone du point de croisement le long du deuxième axe jusqu'à l'entrée du boîtier.

2. Robinet à boisseau sphérique à trois voies selon la revendication 1, **caractérisé en ce que** l'organe de commutation (40) présente, dans le plan commun, trois trous borgnes décalés respectivement de 120°.
